# EUROPEAN PATENT APPLICATION

(11) **EP 3 812 696 A1**
(43) Date of publication of application: **28.04.2021**
(21) Application number: 19204218.2
(22) Date of filing: 21.10.2019
(51) Int. Cl.: G01B 5/00

(54) **MEASURING APPARATUS FOR MEASURING THE DIMENSION OF A WORKPIECE**

(71) Applicant: Mitutoyo Corporation, Kawasaki-shi, Kanagawa 213-8533 (JP); Mitutoyo Europe GmbH, 41469 Neuss (DE)
(72) Inventor: GOD, Bernhard, 72172 Sulz (DE)
(74) Representative: Müller-Boré & Partner Patentanwälte PartG mbB

(57) **Abstract**

An aspect relates to a measuring apparatus (10) for measuring the dimension of a workpiece (12), comprising: a positioning unit (20) for carrying a probe (18) sampling the workpiece (12), the positioning unit (20) being configured to position the probe (18) with respect to the workpiece (12), a scale (22) arranged at the positioning unit (20) and configured to provide a vertical position information of the probe (18), and
a determination unit (24) for determining from the scale (22) the vertical position information of the probe (18), wherein the vertical position information determined by the determination unit (24) changes when the vertical position of the probe (18) changes, and wherein the scale (22) extends at least partially between the probe (18) and the determination unit (24).

## Description

The present invention relates to the field of measuring apparatuses and more particular to measuring apparatuses for measuring the dimension of a workpiece such as coordinate measuring apparatuses.

Measuring apparatuses for measuring the dimension of a workpiece use a probe to sample the (outer) surface of the workpiece. For measuring the dimension, the workpiece is traversed three-dimensionally (3D) with the probe to determine 3D position information of the workpiece. The 3D position information may comprise vertical (height) position information, width position information and depth position information. Usually, the probe is attached to a positioning unit, for example a ram or an arm, which move the probe along the workpiece. The position information of the probe or sampled position of the workpiece is determined from a scale provided at the positioning unit. For example, the measuring apparatus may have a scale for determining the vertical position of the probe and/or the sample position of the workpiece. During the measuring of the workpiece, the probe, the scale and the positioning unit, in particular the arm, may be subject to different vertical or height positions. Usually, different vertical positions have different temperatures since the ambient air temperature varies depending on the height. Due to different ambient air temperatures at the different vertical positions, the arm and/or the scale is subject to changing ambient air temperatures during the measuring of the workpiece. Further, the scale and the arm are usually manufactured out of different materials which exhibit different thermal expansion coefficients. Thus, when the ambient temperature of the arm and/or the scale changes, measuring results are degraded because of the different thermal expansion coefficients.

The present invention has been made in view of the above and it is an objective of the present invention to reduce the influence of changing ambient air temperature to the measuring results determined by the measuring apparatus.

This objective is solved by the subject-matter of the independent claim. Preferred embodiments are defined in the dependent claims.

An aspect relates to a measuring apparatus for measuring the dimension of a workpiece, comprising: a positioning unit for carrying a probe sampling the workpiece, the positioning unit being configured to position the probe with respect to the workpiece, a scale arranged at the positioning unit and configured to provide a vertical position information of the probe, and a determination unit for determining from the scale the vertical position information of the probe, wherein the vertical position information determined by the determination unit changes when the vertical position of the probe changes, and wherein the scale extends at least partially between the probe and the determination unit.

The term "dimension" refers for example to the external dimension of the workpiece and/or the internal dimension of the workpiece, e.g. the inner diameter of a hollow cylinder. In particular, the measuring apparatus may sample with the probe different positions along the surface of the workpiece to determine the dimension of the workpiece. Further, the probe may sample the position of the workpiece contactless, e.g. optically, and/or physically, e.g. with a stylus tip. Each sampled position may yield a position information comprising the vertical position information. Preferably, the position information further includes a horizontal position information of the sampled position. Further, the measuring apparatus may determine a 3D position of a sampled position using the vertical position information and the horizontal position information of said sampled position. The vertical position information may be a height information of the sampled position with respect to a horizontal reference plane. For example, the measuring apparatus may comprise a support member, for example a plate, extending substantially horizontal and on which the workpiece is positioned during measuring. That is, the support member and/or the plate may be used as the horizontal reference plane.

Further particularly, the horizontal position information may comprise a width position information and a depth position information of the sample position. For example, the measuring apparatus may comprise a scale for determining the width position information with respect to a first vertical reference plane and/or a scale for determining the depth position information of the sample position with respect to a second vertical reference plane. Preferably, the first vertical reference plane and the second vertical reference plane are arranged perpendicular to each other and perpendicular to the horizontal reference plane. Further, the width position information may correspond to the shortest distance of the sample position to the first vertical reference plane and/or the depth position information may correspond to the shortest distance of the sample position to the second vertical reference plane.

Preferably, the determination unit is configured to determine the vertical and/or horizontal position information of the sample position from the scales. For example, the determination unit may determine the position information from the scales optically, mechanically and/or electronically. Further, the determination unit may be fixed in a vertical position and the scale may be vertically moveable with respect to the determination unit.

Preferably, the vertical position information of the probe corresponds to the vertical position information of the sample position. In other words, the vertical position information of the probe corresponds to the height information of the sample position.

Further, the positioning unit may be configured to position the probe with respect to the workpiece so that the probe can sample different sample positions at the workpiece. Moreover, the positioning unit may be configured such that a probe head fixture is attached and/or attachable to the positioning unit. The probe head fixture may be configured to carry a probe head including the probe. Further, the probe head fixture may be configured such that the probe head and/or the probe is exchangeable.

Further, the scale may be provided on a carrier so that the scale is attached to the positioning unit by the carrier or the scale is provided as a carrier, e.g. the scale is vapoured on a carrier material, wherein the carrier may be provided at the positioning unit. In particular, the scale and/or the carrier may be attached to the positioning unit, e.g. with springs, clips and/or an elastic adhesive. The elastic adhesive may have a shear modulus of about 1000N/mm² or lower, preferably of about 10N/mm² or lower. Thus, undesired tensions in the scale and/or arm can be avoided. Further, the carrier may be made of a carrier material, e.g. foamed plastics, and may be provided between the scale and the positioning unit. The shear modulus of the carrier material may be about 1000N/mm² or lower, preferably of about 10N/mm² or lower.

Moreover, the scale and the positioning unit may be made of different materials which exhibit different thermal expansion coefficients. The thermal expansion coefficient of the scale itself is determined by the carrier and/or the carrier material the scale is provided on. Furthermore, the thermal expansion of the scale and/or the carrier may be influenced by the positioning unit depending on how rigidly or elastically the scale and/or the carrier is attached to the positioning unit. It is preferably that the scale and/or the carrier is/are attached elastically to the positioning unit. Advantageously, the influence of the positioning unit to the scale and/or the carrier is neglectable.

Preferably, no portion of the scale and/or the scale carrier is fixedly attached onto the positioning unit. Fixedly attached means, that a position of the concerned portion of the scale and/or scale carrier being fixedly attached to the positioning unit would be invariant to the positioning unit. Therefore, the difference of expansion of the scale and/or scale carrier and the positioning unit is assumed symmetrical to the centre of the scale and/or scale carrier. Thus, the scale and/or the scale carrier behaves the same as the centre of the scale and/or the scale carrier is fixedly attached to the positioning unit.

The thermal expansion coefficient, in particular the linear thermal expansion coefficient, of the scale and/or the scale carrier may be significantly lower than the thermal expansion coefficient of the positioning unit. For example, the thermal expansion coefficient of the scale and/or the scale carrier may by at least 3 times, preferably 30 times lower than the thermal expansion coefficient of the positioning unit.

For example, the scale and/or scale carrier can have a thermal expansion coefficient of about 8 µm/(m*K), preferably less than 8 µm/(m*K) and most preferably of about 0 µm/(m*K). For example, the scale and/or the scale carrier can be made at least partially of glass having an expansion coefficient of about 8 µm/(m*K). Most preferably the scale and/or scale carrier can be made at least partially of glass-ceramics having an expansion coefficient of about 0 µm/(m*K).

Further, the positioning unit may have a thermal expansion coefficient of about 22 µm/(m*K). For, example the positioning unit may be made of an aluminium alloy having an expansion coefficient of about 22 µm/(m*K). Further, the positioning unit may be made of granite having a thermal expansion coefficient of about 4,5 µm/(m*K) to 15 µm/(m*K) or the positioning unit may be made of technical ceramics having a thermal expansion coefficient of about 4 µm/(m*K) to 13 µm/(m*K).

In order to measure the dimension of the workpiece, the positioning unit may position the probe at different vertical positions or height positions to sample different positions at the workpiece. Thus, the position unit and the scale are also moved to different vertical positions during measurement of the workpiece. Usually, different vertical positions have different temperatures since the ambient air temperature varies depending on the height. Consequently, the position unit, the scale, the scale carrier and/or the probe are also subject to changing temperatures during measuring the workpiece.

Further, the change of the ambient air temperature affects a) the expansion of the positioning unit and b) the expansion of the scale and/or the scale carrier, in particular, the length/expansion in the vertical direction of the positioning unit, of the scale and/or of the scale carrier.

Both may result in an erroneous determination of the vertical position information of the probe, hereinafter referred to as "reading error". In particular, the following sections of the positioning unit and/or scale are decisive for the reading error: regarding a) above, a section from a lower end of the positioning unit to the center of the scale, weighted by the thermal expansion coefficient of the positioning unit, e. g. about 22 µm/(m*K) in case of aluminium alloy, and regarding b) above, a section from the center of the scale and/or scale carrier in the vertical direction to the determination unit, weighted by the thermal expansion coefficient of the scale and/or scale carrier, e. g. 8 µm/(m*K) in case of glass.

Since, according to the present disclosure, the scale extends at least between the probe and the determination unit, the scale can be arranged close to a lower end of the positioning unit. Thus, the share of the higher thermal expansion of the positioning unit due to the higher thermal expansion coefficient of the positioning unit can be reduced. Thus, requirements to the ambient air condition in which the measuring apparatus is operated can be reduced.

Preferably, the positioning unit may be configured such that the probe is attachable to or at a lower end of the positioning unit and a lower end of the scale and/or the scale carrier is localized at or near the lower end of the positioning unit. In particular, the scale and/or the scale carrier and the positioning unit substantially extend in a vertical direction. Further, the scale and/or the scale carrier may extend at least to the determination unit. The lower end of the scale may correspond to an end of the scale which points towards the horizontal reference plane. Further, the scale may have an upper end such that the scale extends from the lower end to the upper end. The upper end of the scale may point away from the horizontal reference plane. Further, since the lower end of the scale is localised at or near the lower end of the positioning unit, the scale starts close from the lower end of the positioning unit. For example, the distance in the vertical direction between the lower end of the scale and the lower end of the positioning unit is in the range of about 0 mm to about 50 mm, preferably between about 0 mm to about 25 mm and particularly preferred between about 0 mm and about 10 mm. That is, the lower end of the scale is provided close to the probe and the share of the higher thermal expansion of the positioning unit due to the higher thermal expansion coefficient of the positioning unit can be reduced accordingly.

Preferably, the positioning unit is provided as an arm attached to a frame of the measuring apparatus, and wherein the arm may be configured such that the probe is attachable or attached to or at a lower end of the arm. Further, the scale and/or the scale carrier may be attached to the arm (similar as disclosed above with respect to the positioning unit), wherein the arm substantially extends in the vertical direction. Preferably, the lower end of the scale is localized near the lower end of the arm so that the share of the higher thermal expansion of the arm due to the higher thermal expansion coefficient of the arm can be reduced accordingly. In particular, the arm may have the same thermal properties as described above with respect to the positioning unit.

Preferably, the arm is attached movably to the frame. In particular, the arm may be movable in a vertical direction and/or horizontal direction with respect to the frame and/or the horizontal reference plane. For example, the measuring apparatus may comprise a driving unit provided at the frame, wherein the driving unit is configured to move the arm in the vertical direction and/or horizontal direction. Alternatively, the arm is attached to the frame and the measuring apparatus may be configured to position the workpiece with respect to the arm and/or lower end of the positioning unit. In the latter case, the arm may not be moveable attached to the frame. Rather, the arm may be attached to the frame so that the arm is immobile.

The arm may be made substantially of a material having a thermal expansion coefficient which is different to the thermal expansion coefficient of the scale. That is, the thermal expansion coefficient of the arm is different to the thermal expansion coefficient of the scale. In particular, the thermal expansion coefficient of the arm is higher than the thermal expansion coefficient of the scale as discusses above with respect to the positioning unit.

Further, the arm may substantially extend in the vertical direction such that the longitudinal direction of the arm is substantially parallel to the vertical direction. In particular, the longitudinal direction of the arm is substantially parallel to the longitudinal direction of the scale.

Preferably, the arm may have a lower end which points towards the horizontal reference plane, wherein the probe head fixture and the probe is provided and/or arranged and/or attached at the lower end of the arm. Further, the scale may be attached to the arm with a suitable adhesive or carrier substrate and the lower end of the scale may be localised near or at the lower end of the arm. That is, the lower end of the scale is provided close to the lower end of the arm. Thus, the share of the different or higher thermal expansion of the arm due to the different or higher thermal expansion coefficient of the arm can be reduced accordingly. In a preferred embodiment, the lower end of the scale and/or the scale carrier coincides with the lower end of the arm and/or lower end of the positioning unit so that the share of the higher thermal expansion of the arm due to the higher thermal expansion coefficient of the arm can be reduced accordingly.

Preferably, the scale and/or the scale carrier is attached to the arm such that a thermal fixation portion of the scale is invariant to a corresponding portion of the arm, and/or
wherein preferably the position of at least a portion of the remaining portions of the scale are changeable with respect to the arm.

In particular, the position of the thermal fixation portion of the scale and/or the scale carrier may not change with respect to the corresponding portion of the arm when the arm and/or the scale are subject to changing temperatures. Preferably, the thermal fixation portion of the scale and/or the scale carrier may be fixedly attached to the corresponding portion of the arm. For example, the thermal fixation portion may be fixedly adhered, soldered, fixedly clamped, screwed, riveted or welded to the corresponding portion of the arm.

By providing the thermal fixation portion mentioned above, it is possible to define a direction into which the scale expands and/or shrinks with respect to the arm when the scale and or arm are subject to changing temperatures. Further, by fixedly attaching the scale at the arm, the thermal influence of the arm can be reduced. Thus, the determination of the vertical position information from the scale is more accurate as compared to the case that the scale is not provided with a thermal fixation portion.

Further, by providing at least a portion of the remaining portions of the scale such that the position of at least the portion of the remaining portions is changeable with respect to the arm, it is possible to compensate for the thermal expansion of the arm. In particular, all of the remaining portions of the scale and/or the scale carrier except for the thermal fixation portion may be movably mounted or attached to the arm to avoid tension on the scale due to the different thermal expansion coefficients of the arm and the scale.

For example, the remaining portions of the scale may be moveably mounted to the arm with an elastic material or a sliding rail. In a preferred embodiment, the scale is attached to the arm such that the position of all of the remaining portions, except the thermal fixation portion, of the scale are changeable with respect to the arm. Thus, the compensation of the arm's thermal expansion is further improved.

Preferably, the thermal fixation portion is localized at or near the lower end of the positioning unit and/or arm, and wherein the thermal fixation portion may be provided at the lower end of the scale. Thus, the share of the arm's thermal expansion can be reduced. For example, the distance in the vertical direction between the thermal fixation portion and the lower end of the positioning unit is in the range of about 0 mm to about 50 mm, preferably between about 0 mm to about 25 mm and particularly preferred between about 0 mm and about 10 mm.

Preferably, the measuring apparatus may comprise first fluid supply means for supplying the scale with a fluid such as to reduce temperature differences along the scale. In other words, the fluid may be used to control the temperature of the scale. Further, the fluid may have a specified (predetermined or predeterminable) temperature. Advantageously, the reading error caused by thermal influence can be reduced. In particular, the scale and the fluid may reach a thermal equilibrium such that the scale may have a substantially constant temperature along the scale's longitudinal direction, i.e. the vertical direction of the scale. Further, the constant temperature of the scale can be maintained independent of the scale's vertical position and/or the vertical position of the positioning unit and/or the arm.

Preferably, the predetermined temperature of the fluid can be adjusted to an ambient temperature present along the vertical direction of the scale. For example, the fluid can be adjusted to a temperature which corresponds to the ambient temperature at the lowest possible vertical position of the scale. Thus, the time for reaching a thermal equilibrium between the fluid and the scale can be reduced.

Preferably, the fluid is supplied with a flow velocity to the scale and the flow velocity can be adjusted in order to adjust the time for reaching the thermal equilibrium. For example, the flow velocity of the fluid can be increased if the thermal equilibrium shall be reached faster or the flow velocity can be reduced if the thermal equilibrium can be reached later. Further, the fluid may be a gas or a liquid, e.g. air, water, or oil.

Preferably, the first fluid supply means comprises a fluid channel being at least partially in contact, in particular in thermal contact, with the scale and/or the scale carrier, and wherein the fluid channel is configured to conduct a fluid such as to reduce temperature differences along the scale and/or the scale carrier. In the context of this disclosure, the expression "thermal contact" means that a heat exchange between the elements being in thermal contact is possible.

Preferably, the scale is at least partially hollow such to provide a cavity used as the fluid channel. The cavity may at least partially extend along the vertical or longitudinal direction of the scale. Preferably, the cavity extends at least from the lower end of the scale to the upper end of the scale. By providing the above-mentioned cavity as the fluid channel, the scale can be maintained on a substantially constant temperature along the scale's longitudinal direction or vertical direction independent of different vertical positions. Thus, expansion and/or shrinking of the scale is reduced which improves the determination of the vertical position information from the scale.

Alternatively or additionally, the first fluid supply means is at least partly configured to direct a fluid at least partly to an outer surface of the scale and/or scale carrier such as to reduce temperature differences along the scale. For example, air having a predetermined temperature may be blown towards the outer surface of the scale and/or scale carrier.

Preferably, the measuring apparatus comprises a thermal insulation between the scale and the positioning unit and/or the arm. By providing the thermal insulation between the scale and the positioning unit and/or the arm, a heat exchange between the scale and the positioning unit and/or the arm is reduced or avoided. Hence, the thermal insulation avoids bending of the arm since the controlling of the scale's temperature would otherwise lead to an inhomogeneous temperature distribution in the arm. In a preferred embodiment, the thermal insulation extends along the complete longitudinal direction and transverse direction of the scale such that the thermal insulation is provided fully between the scale and the arm.

Alternatively or additionally, the measuring apparatus may comprise second fluid supply means for supplying the positioning unit/and or the arm with at least one fluid such as to reduce temperature differences along the positioning unit and/or the arm and/or the scale. Therefore, the positioning unit and/or the arm is in thermal contact with the scale. Similar to the first fluid supply means discussed above, the at least one fluid may be used for controlling the temperature of the positioning unit and/or the arm and/or the scale. Further, the at least one fluid, which is supplied to the positioning unit and/or to the arm and which throughflows the positioning unit and/or the arm may have a predetermined temperature. By throughflowing the positioning unit and/or the arm with the at least one fluid, the positioning unit and/or the arm and the fluid may reach a thermal equilibrium. Due to the thermal contact between the scale and the arm and/or positioning unit, the scale may have a substantially constant temperature along the scale's longitudinal direction which correspond to the temperature of the positioning unit and/or the arm. Further, the constant temperature of the scale can be maintained independent of the scale's vertical position and/or the vertical position of the positioning unit and/or the arm.

Preferably, the second fluid supply means may comprise at least one fluid channel being at least partially in thermal contact with the arm and/or the scale, and wherein the fluid channel may be configured to conduct the at least one fluid such as to reduce temperature differences along the arm and/or positioning unit and/or scale. Further, the arm can be at least partially hollow such as to provide a cavity as the fluid channel. Further, the cavity may at least partially extend in the vertical direction, preferably between the lower end of the arm and at least the determination unit.

Alternatively, the at least one fluid channel is provided between the scale and the arm or the scale carrier and the arm and the at least fluid channel at least partially extends in the vertical direction between the lower end of the scale and the determination unit. Preferably, the at least one fluid channel substantially extends in the vertical direction from the lower end of the scale to the determination unit.

Preferably, the predetermined temperature of the fluid can be adjusted to a temperature present along the vertical direction of the arm and/or positioning unit. For example, the fluid can be adjusted to a temperature which corresponds to the temperature at the lowest possible vertical position of the arm and/or positioning unit. Thus, the time for substantially reaching a thermal equilibrium between the fluid and the arm and/or positioning unit can be reduced.

Preferably, the fluid is supplied and streamed through the second fluid supply means with a flow velocity that can be adjusted in order to adjust the temperature difference between the fluid and the scale and/or the scale carrier and/or the positioning unit. For example, the higher the flow velocity of the fluid, the lower is the temperature difference between the fluid and the arm and/or the scale. Further, the fluid may comprise or be a gas or a liquid.

These and other objects, features and advantages of the present invention will become more apparent upon reading of the following detailed description of preferred embodiments and accompanying drawings. It should be understood that even though embodiments are separately described, single features thereof may be combined to additional embodiments.
Fig. 1 depicts a measuring apparatus measuring a low vertical position of a workpiece.
Fig. 2 depicts the measuring apparatus of Fig. 1 measuring a high vertical position of the workpiece.
Fig. 3 depicts a conventional positioning unit of a measuring apparatus.
Fig. 4 depicts a positioning unit of a measuring apparatus according to the present disclosure.
Fig. 5A-5C depict detailed schematic views of a positioning unit according to the present disclosure.

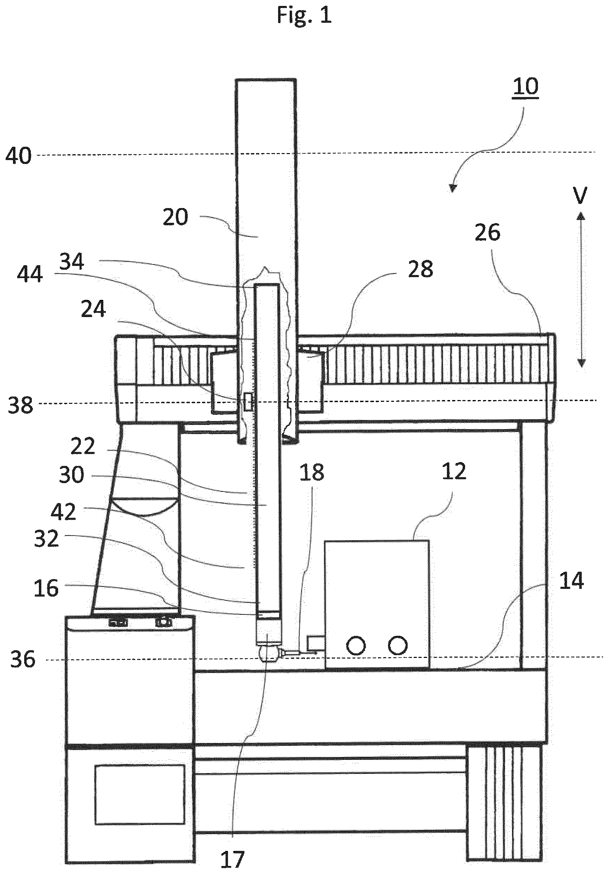

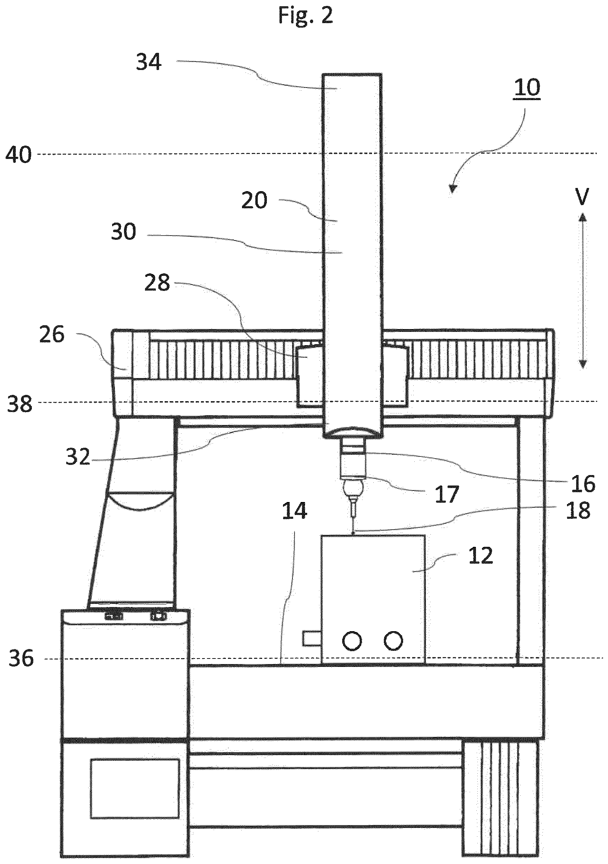

Fig. 1 and 2 depict a measuring apparatus 10 for measuring the dimension of a workpiece 12. For measuring the dimension of the workpiece 12, the workpiece 12 is to be positioned directly or indirectly (e.g. by a fixture) on a support member, e.g. a plate 14, of the measuring apparatus 10. The support member and/or plate 14 substantially extend horizontally and provide a horizontal reference plane onto which the workpiece 12 is positioned directly or indirectly (e. g. by a fixture). The measuring apparatus 10 further comprises a probe 18 for sampling different sampling positions on or at the workpiece 12. For sampling different sampling positions on or at the workpiece 12, the measuring apparatus 10 comprises a positioning unit 20 which is configured to position the probe 18 with respect to the workpiece 12. Further, the measuring apparatus 10 comprises at least one scale 22. The scale 22 provides a vertical position information (or position information along an axis orthogonal to the horizontal reference plane) of the probe 18 which corresponds or relates to the vertical position or height of the sampling position. The measuring apparatus 10 further comprises at least one determination unit 24 for determining the vertical position information from the scale 22. Fig. 1 merely depicts a scale 22 for providing the vertical position information of the probe 18. However, the measuring apparatus 10 may further comprise one or more scales for providing a horizontal position information of the probe 18 and/or the sampling position. The vertical position information determined with the determination unit 24 from the scale 22 may particularly relate to the height position of the sampling position with respect to the plate 14 and/or with respect to the horizontal reference plane. Thus, when the vertical position of the probe 18 changes, the vertical position information determined by the determination unit 24 also changes.

Further, the scale 22 may extend substantially vertically or orthogonally with respect to the plate 14 or the horizontal reference plane. In particular, the longitudinal direction of the scale 22 extends substantially vertical or orthogonally with respect to the plate 14 or the horizontal reference plane. Further, the positioning unit 20 comprises an arm 30 to which the scale 22 is attached or mounted to. The arm 30 or longitudinal direction of the arm 30 extends substantially vertical or orthogonal to the plate 14 or the horizontal reference plane. Further, the probe 18 may be attached to a lower end 32 of the arm 30 or the distal end thereof close to the plate 14. In particular, a probe head fixture 16 may be fixedly or removably attached to the lower end 32 of the arm 30. Further, a probe head 17 may be mountable to the probe head fixture 16, wherein the probe head 17 may carry the probe 18. The lower end of the arm 32 may be an end of the arm 30 which substantially points towards the plate 14. Further, the arm has an upper end 34 which substantially points away from the plate 14 and the arm 30 extends substantially vertical between the lower end 32 of the arm 30 and the upper end 34 of the arm 30.

Further, the arm 30 is movably attached or mounted to a frame 26 of the measuring apparatus 10 such that the arm 30 can be moved (particularly with respect to the plate 14) during measuring the workpiece 12. In particular, the arm 30 is movably attached to the frame 26 such that the arm 30 can be moved to different vertical positions along a vertical direction V. Thus, the vertical position of the probe 18 and the scale 22 is or can be changed if the vertical position of the arm 30 is changed. For example, Fig. 1 shows the probe 18 in a sample position of the workpiece 12 having a low vertical position and Fig. 2 shows the probe 18 in a sample position of the workpiece 12 having a high vertical position.

When the positioning unit 20 and/or the arm 30 of the measuring apparatus 10 is substantially moved vertically along the vertical direction V, the positioning unit 20 and/or the arm 30, the scale 22 and the probe 18 particularly may be subject to changing ambient temperatures. For example, the ambient temperature at a first height 36 may be different, in particular lower, than the ambient temperature at a second height 38 (the reading level) and the temperature at the second height 38 may be different, in particular lower, than the temperature at a third height 40. Further, the first height 36, the second height 38 and the third height 40 are different heights. For example, the temperature at the first height 36 is 20,6 °C, the temperature at the second height 38 is 21,2°C and the temperature at the third height 40 is 21,6°C.

Further, the scale 22 and the arm 30 may be made of different materials which exhibit different thermal expansion coefficients. In other words, the thermal expansion coefficient of the arm 30 and the thermal expansion coefficient of the scale 22 are or may be different. For example, the thermal expansion coefficient of the arm 30 is higher than the thermal expansion coefficient of the scale 22. Due to the different temperatures along the vertical direction V, the arm 30 and the scale 22 may expand differently when traversing vertically, which may degrade or render inaccurately the vertical position information determined from the scale 22.

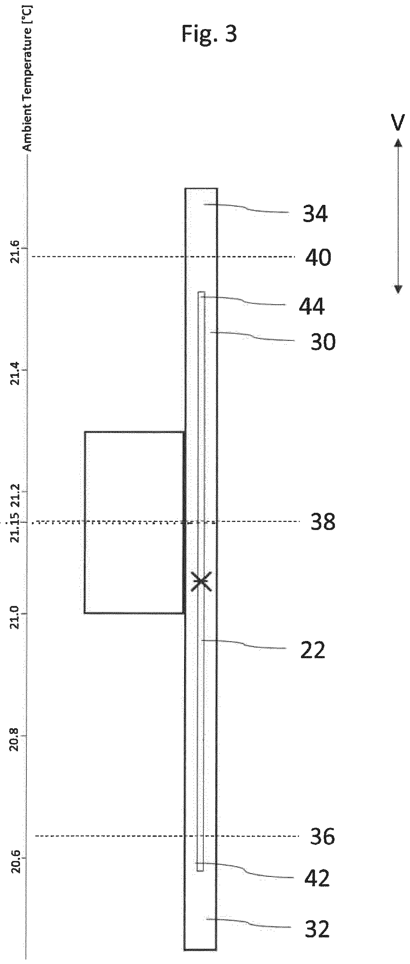

As discussed above, when measuring the workpiece 12, the scale 22 and the arm 30 may be subject to different ambient air temperatures which might cause an erroneous determination of the vertical position information. For example, a conventional positioning unit 20 or arm 30 as shown in Fig. 3 may have a scale 22 attached to it. The scale 22 may substantially extend along the vertical direction V and may at least be partially provided between the lower end 32 of the arm 30 and the determination unit (not shown in Fig. 3) located at second height level 38. The change of the ambient air temperature, e.g. moving the lower end 32 of the arm 30 from the first height 36 to the second height 38, affects a) the expansion of the arm 30 and b) the expansion of the scale 22, in particular the length/expansion in the vertical direction V of the arm 30 and the scale 22.

Both may result in a reading error of the vertical position information from the scale 22. In particular, the following sections of the positioning unit and/or scale are decisive for the reading error: regarding a) above, a section from a lower end 32 of the arm 30 to the center of the scale 22 (indicated by a bold X), and regarding b) above, a section from the center of the scale 22 in the vertical direction to the determination unit.

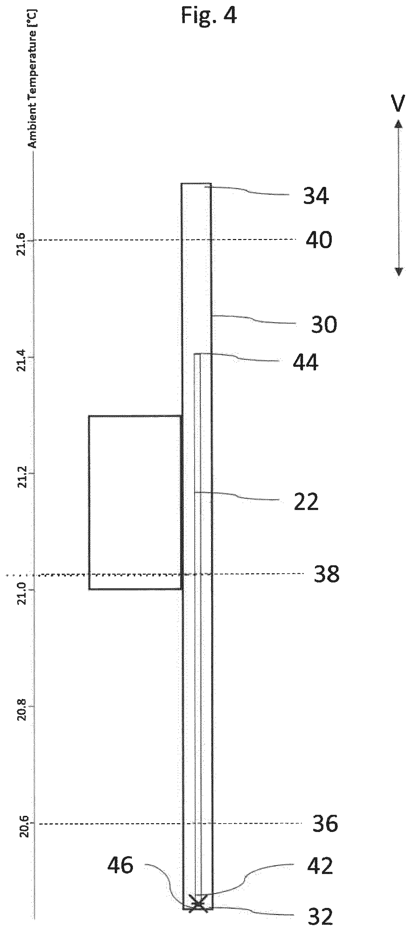

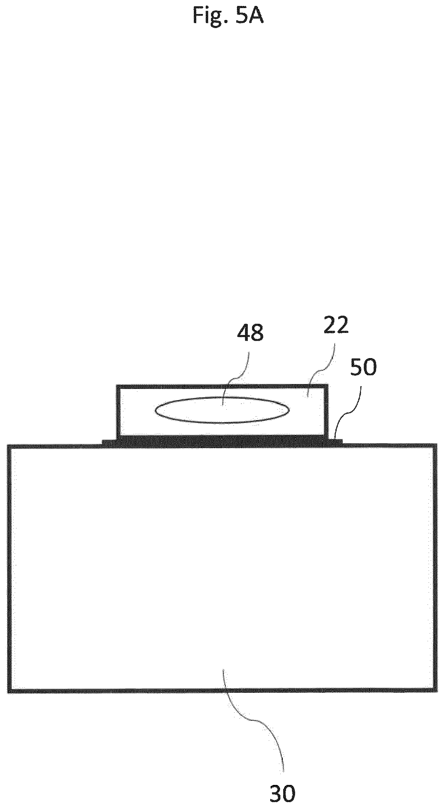

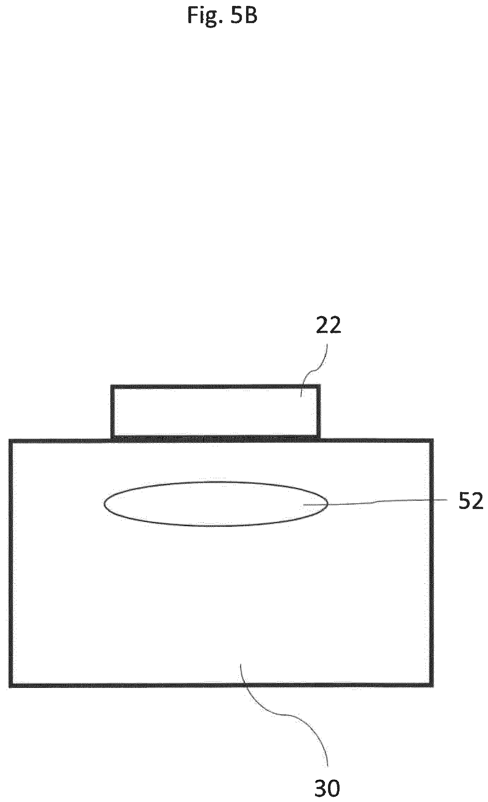

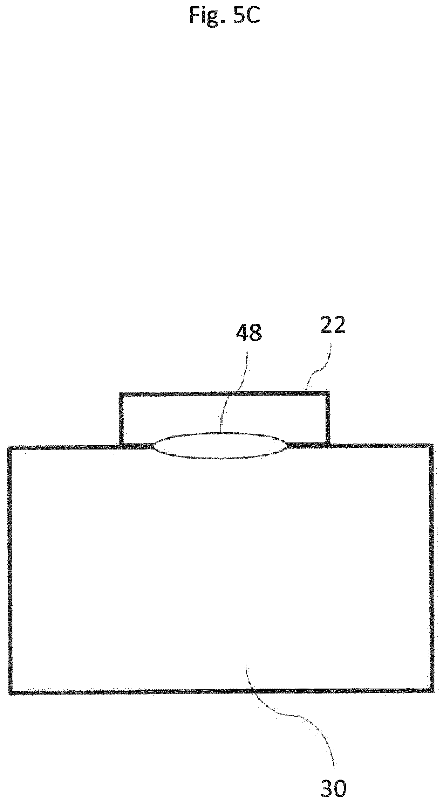

Particular measures for improving the accuracy of the vertical position information are explained with reference to Fig. 4 and 5.

Fig. 4 depicts in a simplified manner the arm 30 as shown in Fig. 1. The arm 30 extends substantially in the vertical direction V (or substantially orthogonally with respect to the plate 14) from the lower end 32 of the arm 30 to the upper end 34 of the arm 30. The lower end 32 of the arm 30 points towards the plate 14 (as shown in Fig. 1) and the upper end 34 of the arm 30 points away from the plate 14. The arm 30 substantially is moveable in the vertical direction V with respect to the workpiece 12 located on the plate 14 and the determination unit (not shown in Fig. 4) located at second height level 38. That is, the vertical position of the determination unit is fixed with respect to the plate 14.

Fig. 4 further shows the scale 22 which substantially extends in the vertical direction V and which is attached to the arm 30. In particular, the scale 22 extends at least partly between the probe head fixture 16 and/or at least the determination unit. For improving the reading of the vertical position information, the scale 22 is provided as close as possible to the probe 18 (Fig. 1 and/or Fig. 2). Specifically, the scale 22 has a lower end 42 which substantially points or is directed towards the plate 14 and an upper end 44 which substantially points away from the plate 14. As shown in Fig. 4, the lower end 42 of the scale 22 is provided near or at the lower end 32 of the arm 30. By providing the scale 22 as close as possible to the probe 18 and/or the lower end 32 of the arm 30, reading errors related to different thermal expansion coefficients of the arm 30 and scale 22 can be reduced. Further, the reading unit may be located lower by the same distance the scale 22 is provided lower in comparison to the conventional implementation shown in Fig. 3.

Further, the scale 22 may comprise a thermal fixation portion 46 schematically indicated by a cross in Fig. 4. The thermal fixation portion 46 is a portion of the scale 22 whose position is invariant or unchangeable with respect to a corresponding portion of the arm 30. That is, the thermal fixation portion 46 of the scale 22 and the corresponding portion of the arm 30 maintain their respective positional relationship to each other when the scale 22 and/or the arm 30 are subject to changing temperatures. Further, at least a portion of the remaining portions of the scale 22 is attached to the arm 30 such that the position of at least the portion of the remaining portions is changeable with respect to the arm 30 when the scale 22 and/or the arm 30 are subject to changing (ambient) temperatures.

By providing the thermal fixation portion 46, it is possible to determine the direction in which the scale 22 expands and/or shrinks when the scale 22 is subject to changing (ambient) temperatures. Thus, the determination of the vertical position information from the scale 22 is improved.

As shown in Fig. 4, the thermal fixation portion 46 is preferably provided at the lower end 42 of the scale 22.

**Fig. 5A-5C** show further particular measure(s) to improve the determination or accuracy of the vertical position information. In particular, Fig. 5A-5C schematically show a cross-section of the arm 30 and scale 22 orthogonal to the vertical direction V when looking in the direction of the vertical direction V. In particular, Fig. 5A-5C show scale 22 which is thermally coupled to, or is part of, or incorporates at least one cavity 48/52. Further, the measuring apparatus 10 may be configured to supply a fluid to the at least one cavity 48/52 so as to control the temperature of the scale 22 and/or the arm 30.

Fig. 5A shows that the scale 22 is at least partially hollow along the vertical direction V such to provide at least one cavity 48 substantially along the longitudinal extension of the scale 22 in the vertical direction V. The at least one cavity 48 may be provided as a fluid channel for supplying a fluid to the scale 22. In particular, the fluid streams or flows through the cavity 48 which preferably substantially extends from the lower end 42 of the scale 22 to the upper end of the scale 44. The fluid may be supplied to the scale 22 or cavity 48 with a substantially constant specified temperature which preferably corresponds to a specific temperature present along the vertical direction V of the scale 22, for example the temperature at the first height 36. By streaming or flowing the fluid through the scale 22 and/or through the cavity 48, the scale 22 can be maintained at a substantially constant temperature. Thus, a thermal expansion or shrinking of the scale 22 is significantly reduced when the ambient temperature surrounding the scale 22 changes due to a vertical movement of the scale 22.

Further, at least one thermal insulation or thermal insulation portion 50 may be provided at least partially between the scale 22 and the arm 30. In a preferred embodiment, the thermal insulation or thermal insulation portion 50 is provided fully between the scale 22 and the arm 30. The thermal insulation 50 reduces a heat exchange between the scale 22 and the arm 30 and, thus, an inhomogeneous temperature distribution of the arm 30, which would lead to a bending of the arm 30, is reduced. For example, the thermal conductivity of the thermal insulation or thermal insulation portion 50 may be no more than 5 W/K*m², preferable of no more than 3 W/K*m², and most preferred no more than 1 W/K*m².

In an alternative or additional embodiment shown in Fig. 5B, the arm 30 may be formed hollow such that the arm 30 comprises at least one cavity 52 for supplying a fluid to the arm 30. The at least one cavity of the arm 52 may at least partially extend through the arm 30 along the vertical direction V. In the preferred embodiment, the cavity of the arm 52 may substantially extend from the lower end of the arm 32 to the upper end of the arm 34. In this embodiment, the thermal insulation 50 between the scale 22 and the arm 30 particularly is not provided. Rather, the scale 22 and the arm 30 are provided in thermal contact with each other such as to allow a heat exchange between the scale 22 and the arm 30. For example, the thermal conductivity between the scale 22 and the arm 30 may be higher than 300W/K*m², preferable higher than 400W/K*m², and most preferable higher than 500W/K*m².

By supplying or streaming or flowing a fluid having preferably a substantially constant temperature, which may be predetermined or predeterminable, through the cavity 52 of the arm 52, the arm 30 and/or the scale 22 can be substantially held on a constant temperature (or temperature gradients can be reduced significantly) which avoids degradation of the vertical position information determined by the determination unit 24.

In an alternative embodiment shown in Fig. 5C, a cavity 48 is provided between the scale 22 and the arm 30 such that the scale 22 and the arm 30 are in thermal contact with the cavity 48. Cavity 48 may at least partially extend along the vertical direction V. Preferably, cavity 48 extends between the lower end 42 of the scale 22 and the upper end of the scale 22. As discussed above, measuring apparatus 10 may be configured to stream a fluid through cavity 48 in order to control the temperature of the scale 22 and/or the arm 30.

Hence, requirements to the ambient temperature, for example a low temperature deviation with changing height, can be eased.

### Reference sign list

- 10: measuring apparatus
- 12: workpiece
- 14: plate
- 16: probe head fixture
- 17: probe head
- 18: probe
- 20: positioning unit
- 22: scale
- 24: determination unit
- 26: frame
- 28: driving unit
- 30: arm
- 32: lower end of the arm
- 34: upper end of the arm
- 36: first height
- 38: second height
- 40: third height
- 42: lower end of the scale
- 44: upper end of the scale
- 46: thermal fixation portion
- 48: cavity of the scale
- 50: thermal insulation
- 52: cavity of the arm
- V: vertical direction

## Claims

1. A measuring apparatus (10) for measuring the dimension of a workpiece (12), comprising:
- a positioning unit (20) for carrying a probe (18) sampling the workpiece (12), the positioning unit (20) being configured to position the probe (18) with respect to the workpiece (12);
- a scale (22) arranged at the positioning unit (20) and configured to provide a vertical position information of the probe (18); and
- a determination unit (24) for determining from the scale (22) the vertical position information of the probe (18), wherein the vertical position information determined by the determination unit (24) changes when the vertical position of the probe (18) changes, and
wherein the scale (22) extends at least partially between the probe (18) and the determination unit (24).

2. The measuring apparatus (10) of claim 1, wherein the positioning unit (20) is configured such that the probe (18) is attachable at a lower end of the positioning unit (20) and a lower end (42) of the scale (22) is localized at or near the lower end of the positioning unit (20); and/or
wherein the scale (22) substantially extends in a vertical direction (V).

3. The measuring apparatus (10) of any one of the preceding claims, wherein the positioning unit (20) comprises an arm (30) attached to a frame (26) of the measuring apparatus (10), the arm (30) being configured such that the probe (18) is attachable at a lower end (32) of the arm (30) and the scale (22) is attached to the arm (30) such that a lower end (42) of the scale (22) is localized at or near the lower end (32) of the arm (30).

4. The measuring apparatus (10) of claim 3, wherein the arm (30) substantially extends in a vertical direction (V) and the lower end (42) of the scale (42) coincides with the lower end of the arm (32).

5. The measuring apparatus (10) of claims 3 or 4, wherein the scale (22) is attached to the arm (30) such that a thermal fixation portion (46) of the scale (22) is invariant to a corresponding portion of the arm (30), and
wherein preferably the position of at least a portion of the remaining portions of the scale (22) are changeable with respect to the arm (30).

6. The measuring apparatus (10) of claim 3 or 4, wherein the thermal fixation portion (46) is localized at or near the lower end (32) of the arm (30), preferably wherein the thermal fixation portion (46) is provided at the lower end of the scale (22).

7. The measuring apparatus (10) of any one of claims 3-6, wherein the arm (30) is configured such that a probe head fixture is attachable at the lower end (32) of the arm (30), the probe head fixture (16) being configured to carry a probe head (17) including the probe (18).

8. The measuring apparatus (10) of any one of the preceding claims, wherein the determination unit (24) is fixed in a vertical position and wherein the scale (22) is vertically moveable with respect to the determination unit (24).

9. The measuring apparatus (10) of any one of the preceding claims, further comprising first fluid supply means (48) and/or second fluid supply means (52) for supplying the scale (22) and/or the arm (30) with at least one fluid such as to reduce temperature differences along the scale (22) and/or the arm (30).

10. The measuring apparatus (10) of claim 9, wherein the first fluid supply means (48) comprises at least one fluid channel (48) being at least partially in thermal contact with the scale (22), and wherein the fluid channel (48) is configured to conduct a liquid such as to reduce temperature differences along the scale (22);
and/or the second fluid supply means (52) comprises at least one fluid channel (52) being at least partially in thermal contact with the arm (30) and/or the scale (22), and wherein the fluid channel (52) is configured to conduct a fluid such as to reduce temperature differences along the arm (30) and/or the scale (22).

11. The measuring apparatus (10) of claim 10, wherein the scale (22) is at least partially hollow such to provide a cavity (48) used as the fluid channel; and/or
wherein the arm (30) is at least partially hollow such to provide a cavity (52) used as the fluid channel; and/or
wherein a cavity is provided between the scale (22) and the arm (30) such to provide the fluid channel.

12. The measuring apparatus (10) of claims 8-10, wherein the first fluid supply means at least partly are further configured to direct a fluid at least partly to an outer surface of the scale (22) such as to reduce temperature differences along the scale (22).

13. The measuring apparatus (10) of any one of the preceding claims, wherein the scale (22) and the positioning unit (20) and/or the arm (30) are in thermal contact with each other.
